# EUROPEAN PATENT APPLICATION

(11) **EP 4 474 763 A1**
(43) Date of publication of application: **11.12.2024**
(21) Application number: 23382563.7
(22) Date of filing: 07.06.2023
(51) Int. Cl.: G01B 11/25, D04B 9/02, D04B 35/20

(54) **METHOD FOR DETECTING DEFECTS IN A KNITTED FABRIC MANUFACTURED BY AN AUTOMATIC KNITTING MACHINE, CORRESPONDING SYSTEM AND COMPUTER PROGRAM**

(71) Applicant: Canmartex Catgrup, S.L., 08310 Argentona (ES); Fundació Eurecat, 08290 Cerdanyola del Vallès (ES)
(72) Inventor: Marti Mac Naught, Enric, 08912 Badalona (ES); Gallofre Piquer, Jorge, 08310 Argentona (ES); Marti Casas, Enric, 08310 Argentona (ES); Dalmau Terradas, José Maria, 08310 Argentona (ES); Castanyer Caballe, Arcadi, 17160 Anglès (ES); Llamas Martínez, Victor, 49005 Zamora (ES); Serres Serres, Josep Maria, 43500 Tortosa (ES); Plantá Torralba, Francisco Javier, 08320 El Masnou (ES)
(74) Representative: Curell Suñol S.L.P.

(57) **Abstract**

Method, system and computer program for detecting defects in a knitted fabric manufactured by an automatic circular knitting machine, wherein: a camera is provided in a fixed position inside the top part of the knitted fabric and captures images of the fabric; said data then used for automatically determining the presence of defects in the fabric by comparing with data from a reference fabric that is free of defects.

## Description

### Field of the invention

The invention is comprised in the field of automatic knitting machines.

The invention more specifically relates to a method for detecting defects in a knitted fabric manufactured by an automatic circular knitting machine, said automatic knitting machine comprising a plurality of yarn feeders and a rotating circular knitting part; said knitting part comprising a plurality of movable needles and a plurality of movable sinkers shaped as thin plates and arranged between said needles, each of said needles being adapted to subsequently catch and free a yarn provided by one of said yarn feeders when said needle is moved, and each of said sinkers being adapted to subsequently hold and free a loop of a stitch of yarn when said sinker is moved, said knitting machine further comprising an actuating device for automatically moving said needles and said sinkers according to a preestablished pattern for manufacturing a knitted fabric from the yarns provided by said yarn feeders by a cooperation between said needles and said sinkers; said knitting part being arranged in a rotating cylinder which make said needles and said sinkers to travel along a circumference which is coaxial with said rotating cylinder; said knitted fabric being knitted forming a tube of fabric with an external side and an internal side, said tube of fabric having a tubular top portion in contact with said knitting part.

The invention also relates to a system for detecting defects in a knitted fabric manufactured by an automatic circular knitting of this type, and a corresponding computer program to carry out the method.

### Prior art

Automatic knitting machines are commonly used for manufacturing knitted fabrics at industrial scale. These machines are designed to work intensively. They have a high number of components, including a high number of needles and sinkers as well as the mechanics to move them, which must work in a very precise manner to knit each stitch without defects. The machine is usually equipped with sensors and monitored by a human knitter who can stop the process if something goes wrong. Both the machine components and the produced knitted fabric can be monitored. When the machine is stopped because a defect has been detected in the knitted fabric, there is a high cost associated to the interruption because the human knitter must check the knitted fabric, discard the section with defects, fix the problem and restart the machine. If a large portion of fabric has been knitted with defects and went unnoticed, that fabric will be wasted. Therefore, it is of great importance to early detect the signs of defects in defects in the fabric as soon as possible. Moreover, said defects may be associated to mechanical defects in the machine, for example, in the sinker or in the needles, so that an early detection and identification may prevent further problems during subsequent knitting operations.

### Description of the invention

The purpose of this invention is to provide a method for detecting defects in a knitted fabric manufactured by an automatic circular knitting machine of the type indicated above in the chapter "Field of the invention", which can be easily implemented at low cost without modifying the knitting machine and allowing an immediate, automatic reliable detection of different sort of defects in the fabric.

This is achieved by means of a method for detecting defects in a knitted fabric manufactured by an automatic circular knitting machine of this type, characterized in that a digital camera is provided statically arranged inside said tubular top portion of said tube of fabric in a fixed position, and does not rotate with said rotating cylinder; said digital camera being configured to take digital images of said internal side of said tube of fabric; wherein said method comprises repeating the following steps while said automatic knitting machine is working manufacturing said knitted fabric:
[a] obtaining from said camera a digital image of a section of said knitted fabric that is in the field of view of said digital camera, in particular, a section of the internal side of the tubular fabric;
[b] performing an automatic image comparison of said digital image with a reference image of a reference knitted fabric that is free of defects;
[c] in function of said comparison, automatically determining the presence of at least one defect in said section of said knitted fabric;
[d] waiting a predefined time corresponding to the time necessary for a new section of said knitted fabric to be positioned in the field of view of said digital camera.

As will be seen below in the detailed description of the embodiments, the method according to the invention can be easily implemented by simply installing a digital camera and using a software to carry out an automatic image comparison and determination of a defect in the fabric. Installing a digital camera in a position for capturing proper digital image frames of the fabric is generally not a problem, for example, most of the machines have an empty space inside the top part where the fabric is knitted. The camera can be attached to the knitting machine itself or to an external frame. Different types of digital cameras may be envisaged, for example a photographic camera or a video camera that is able to generate individual frames.

The top portion of the tubular fabric is a portion wherein said knitted fabric usually has a neutral tension so that it is not expanded or compressed. Therefore, the placement of the camera in the top portion is advantageously suited for capturing the details of the fabric without further alterations thereof, which increases the accuracy.

Contrary to the known art where the camera is usually provided in a zone where the fabric is folded, or outside the tubular top portion of the tubular fabric, having the camera provided inside the tubular top portion of the tubular fabric has the additional advantage that the resulting images are better defined. Due to the friction on the yarns during the knitting of the fabric, small fragments of said yarns are expelled forming flocks. Said flocks have the potential to interfere with the camera, producing backscatter or accumulating in the camera lens. They may also affect the internal electronical components of the camera, in particular, its sensor. However, it has been found that the density of flocks in the internal space is lower than in the outside, thus the influence of the flocks is minimized in the present disclosure, and the resulting images are better. This effect is further improved in machines having blowing means, for example fans, that are configured to blow air towards the internal side of said knitting part for refrigerating purposes.

The images taken from the digital camera may not necessarily be taken from a single shot, for example, as non-limiting examples, multiple shots or frames may be combined in order to increase the resolution, the contrast, the luminosity or the depth of field.

Said obtained digital image is compared with a reference image of a fabric that is free of defects and, depending on the result of the comparison, the presence of defects in the fabric is determined. It must be noted that the method of the invention in its more basic implementation does not require to detect specific defects, the simple presence of a defect is advantageous enough for informing the operators and take the corresponding measures. The determination of the presence of defects may then be used to issue a warning to the operator so that adequate actions may be taken.

Different methods for comparing digital images are known in the art, in particular in the sector of the computer vision. For the sake of brevity, it falls outside the scope of this document to describe in detail the particularities of this type of technology, moreover different methods can be applied for the same purpose. For the purposes of exemplification, the method for comparing images may be based on obtaining bidimensional Fast Fourier Transform, FFT, of the digital image and the reference image. The FFT of the reference image may advantageously be obtained a single time at the beginning of the process. The FFT allows to determine several parameters of the fabric, for example, its inclination, the separation between the yarns of the mesh, and its periodicity. By correlating the FFT of the digital image and the FFT of the reference image it is possible to obtain the similarity of said parameters between them. Other techniques may also be applied, even in combination with the FFT correlation, for example, obtaining a high-contrast image of the digital image, wherein the texture of the fabric is automatically removed using the reference image. Dots that appear in said high-contrast image that surpass a predetermined area are identified as defects.

Since the scanner is fixed while the fabric rotates, subsequent iterations of the method capture different sections of the fabric, preferably adjacent thereof. It is generally not necessary to compensate for the curvature of the fabric if the captured sections are small enough, because the camera is not using a wide lens and/or because the camera is positioned close to the fabric.

All the above provides a fast and robust process for immediately detecting a variety of defects in the fabric, further improving the accuracy. The method allows a highly reliable detection of a defect in the fabric because the pattern can be simple to compare with a reference, and the deviation easily determined. In addition, the method can be easily adapted to a variety of knitting machines and fabrics. Adapting the method to a particular fabric can be done by software, by an initial step of calibration and obtaining the reference fabric, its image and profile.

Preferably, said reference image is obtained from one of:
- an initial calibration step comprising equivalent step [a], in which said machine has knitted a section of said knitted fabric that is free of defects; or
- a database containing at least a reference image for a reference fabric.

In the first option, the verification that the reference fabric is free of defects may be done by an operator. In this case, an initial portion of fabric may be knitted and then the corresponding images and profiles are taken. This option grants that the fabric is the same in both cases. In the second option, the type of fabric may be selected at the beginning and then used as reference. This option has the advantage that no initial calibration step is required for the method itself, albeit it may be necessary for setting up the knitting operation of the machine.

Preferably, illumination means is arranged to illuminate at least the internal side of said tubular top part that is in the field of view of said digital camera. This has the advantage of increasing the available light captured by the camera, thereby allowing the use of faster shutter speeds.

Preferably, said illumination means comprises a projector provided statically arranged inside said tubular top portion of said tube of fabric in a fixed position, and does not rotate with said rotating cylinder. The power consumption is thereby minimized and the area to be illuminated may be restricted to what the camera is able to capture. The digital camera and the projector can be attached together.

Preferably, said projector and said digital camera are part of a structured-light scanner which is provided statically arranged inside said tubular top portion of said tube of fabric in a fixed position, and does not rotate with said rotating cylinder; said projector being arranged perpendicular to said internal side of said knitted fabric and configured to project structured light, and said digital camera being arranged spaced away from said projector;
wherein said step [a] breaks down into the following steps:
   [a1] projecting a first structured light pattern with said projector and obtaining a first partial digital image from said digital camera;
   [a2] projecting a second structured light pattern with said projector and obtaining a second partial digital image from said digital camera, said second structured light pattern being complementary to said first structured light pattern, so that the addition of said first structured light pattern and said second structured light pattern is an unstructured homogeneous illumination pattern;
   [a3] combining said first partial digital image and said second partial digital image, thereby obtaining said digital image of said section of said knitted fabric;
wherein said method further comprises the following steps between the steps [a] and [d]:
   [a'] automatically deriving from said first partial digital image and said second partial digital image a 3D profile of said section of said knitted fabric, said 3D profile containing information of a relief profile of the fabric in a direction perpendicular to said knitted fabric;
   [b'] performing an automatic comparison of said 3D profile with a previously obtained reference 3D profile of said reference knitted fabric that is free of defects;
   [c'] in function of said comparison, automatically determining the presence of at least one defect in said section of said knitted fabric;

It may be envisaged that steps [a']-[c'] are performed before the steps [b]-[c] or after the steps [b]-[c], or even in parallel to the steps [b]-[c] in order to increase the processing speed.

A structured-light scanner is a known device that comprises a projector and at least one camera, the projector is perpendicular to the fabric and the camera is spaced away, preferably in a horizontal direction, and focusing the area illuminated by the projector. Therefore, there is an angle between the imaginary lines that depart from the camera and projector and join in the same point in the fabric, said angle is greater than 0° and less than 90° and may also be selected in function of the distance to the fabric and the curvature of the fabric. When light is projected onto the internal surface of the fabric, the patterns become distorted. The camera or cameras capture these images, and it is then possible to obtain a 3D profile containing information of the structure of the surface, not only its bidimensional projection. Therefore, said 3D profile contains information about the relief profile of the fabric in a direction perpendicular to said knitted fabric which may be envisaged as a "height" of the peaks and valleys formed by the yarns. This information may then be used to determine possible defects, for example, if the tension is too high or too low, if the yarns are of the adequate size, etc. In order to do so, the 3D profile obtained is compared with a reference 3D profile of a fabric that is free of defects. Different methods may be envisaged for this comparison depending on the nature of the data of said 3D profile. As a non-limiting example, the comparison may include a comparison of the height of yarns and/or knots. Profilometry methods for structured-light scanners are known in the art and, due to their complexity, their specific particularities fall out of the scope of this document. Some indications are given in the embodiments.

Besides, by using two complementary patterns and combining the two digital images corresponding to them, it is possible to obtain, without the need for additional components, a complete bidimensional image of a section of the fabric used in steps [a], [b] and [c].

An important aspect of this embodiment is that it allows detecting not only defects visible in a bidimensional image, but also defects regarding the 3D profile of the fabric. In order to maximize this effect, the images are taken in the top section of the fabric, wherein, after being knitted the tension of the yarns is substantially neutral. The images are taken from the inside of the tubular fabric, so that the scanner can be easily positioned. It has to be noted that the fabric is also rotating with the knitting part and the rotational structure of the machine, therefore, the two partial images have to be taken in a time short enough to guarantee that the same section of the fabric can be acquired.

Preferably, and equivalent to the case of the bidimensional digital image, said reference 3D profile is obtained from:
- an initial calibration step comprising equivalent steps [a] (that is, the sub-steps [a1], [a2] and [a3]) and [a'], in which said machine has knitted a section of said knitted fabric that is free of defects; or
- a database containing at least a reference 3D profile for a reference fabric.

Preferably, combining said first partial digital image and said second partial digital image in step [a3] comprises adding said first partial digital image to said second partial digital image. A simple addition of digital pixels is advantageous for minimizing calculation power. In a preferred embodiment, the images are grayscale containing 256 levels of gray, which allows a direct addition. In other preferred embodiments a monochromatic camera with 10 or 12 bits are used. In embodiments where the images are RGB colored, the three columns (one for each color) can be processed independently.

Preferably, said first structured light pattern comprises a first pattern of alternate vertical white lines and vertical black lines, and said second structured light pattern comprises a second pattern of alternate vertical white lines and vertical black lines, all the white lines and the black lines of the first pattern and the second pattern having the same width, wherein the position of the black lines of the first pattern corresponds to the position of the white lines of the second pattern, and the position of the white lines of the first pattern corresponds to the position of the black lines of the second pattern. Since all the vertical black and white lines have the same width, and complementary aligned between the first and second patterns, it is granted that the addition results in a homogeneous white illumination. This embodiment simplifies the determination of the pattern because only the width of the lines may be selected.

Preferably, the width of the white lines and the black lines of the first pattern and the second pattern is smaller than the space between yarns of the weft and the distance between yarns of the warp of the knitted fabric, in particular, in the section of the top portion wherein the fabric is expanded, so that there is enough resolution to determine the shape and distance separation between yarns of the warp and weft.

Preferably, the width of the white lines and the black lines of the first pattern and the second pattern is bigger than the width of the yarns of said knitted fabric, in order to maximize the possibility to illuminate each individual yarn with a white line of the pattern.

Preferably, said structured-light scanner comprises a further digital camera statically arranged inside said tubular top portion of said tube of fabric in a fixed position, and that does not rotate with said rotating cylinder; said further digital camera being spaced away from said projector and from said digital camera, and configured to take further digital images of the same section of the knitted fabric that said digital camera, wherein, step [a1] further comprises obtaining a further first partial digital image of said section of said knitted fabric from said further digital camera, step [a2] further comprises obtaining a further second partial digital image of said section of said knitted fabric from further said digital camera, and said 3D profile obtained in step [a'] is further derived from said further first partial digital image and said further second digital image. Using a second camera, or even more than two cameras, allows to increase the resolution of the 3D profile, and in particular, to better reconstruct an accurate tridimensional profile of the fabric. The further camera is preferably horizontally located opposite the first camera regarding the projector.

Preferably, said method further comprises automatically stitching together each of said digital images of each of said sections of said knitted fabric obtained in each step [a] (which in some embodiments break down into steps [a1], [a2] and [a3]), thereby obtaining a composed output image of the knitted fabric that has been knitted by said machine. This has the advantage that the operator can visualize an image containing all the fabric that has been knitted, which is useful in determining that the overall process has been free of defects and that the resulting fabric complies with the expected quality.

Preferably, in case of determining the presence of at least one defect in said section of said knitted fabric in step [c] and/or in step [c'], the method comprises a further step of defect classification, in which a type of defect is automatically derived from said complete digital image and/or said 3D profile. Different classification methods may be envisaged for this classification, a non-limiting example known in the art is using a neural network, NN, that has been previously trained using a training set of classified defects in the same type of fabric that is being knitted.

This automatic classification has the added advantage that it may contain information about the possible source of the defect, for example, some defects in the fabric are due to defects in the sinkers and/or in the needles. Having this additional information may advantageously direct the operator to the source of the problem.

The invention also comprises a corresponding system for detecting defects in a knitted fabric manufactured by an automatic circular knitting machine, said automatic knitting machine comprising a plurality of yarn feeders and a rotating circular knitting part comprising needles and sinkers that cooperate with each other to knit said knitted fabric; said knitting part being arranged in a rotating cylinder which make said needles and said sinkers to travel along a circumference which is coaxial with said rotating cylinder; said knitted fabric being knitted forming a tube of fabric with an external side and an internal side, said tube of fabric having a tubular top portion in contact with said knitting part;
characterized in that a digital camera is provided statically arranged inside said tubular top portion of said tube of fabric in a fixed position, and does not rotate with said rotating cylinder; said digital camera being configured to take digital images of said internal side of said tube of fabric;
wherein said method comprises repeating the following steps while said automatic knitting machine is working manufacturing said knitted fabric:
   [a] obtaining from said camera a digital image of a section of said knitted fabric that is in the field of view of said digital camera;
   [b] performing an automatic image comparison of said digital image with a reference image of a reference knitted fabric that is free of defects;
   [c] in function of said comparison, automatically determining the presence of at least one defect in said section of said knitted fabric;
   [d] waiting a predefined time corresponding to the time necessary for a new section of said knitted fabric to be positioned in the field of view of said digital camera.
the system further comprising:
   - a processor connected to said digital camera;
   - a computer program comprising computer instructions which, when executed by said processor, cause said processor to carry out the method according to said preferred embodiments.

The system optionally has the structural features according to the preferred embodiments discussed above for the method, and the computer program optionally comprises instructions to carry out the steps of the method according to said preferred embodiments.

The invention also comprises the computer program defined above in the description of the method and system.

The invention also comprises other features concerning details illustrated in the detailed description of embodiments of the invention and in the attached drawings.

### Brief description of the drawings

The advantages and features of the invention can be seen from the following description in which, with a non-limiting character with respect to the scope of the main claim, preferred embodiments are described in reference to the drawings.
Fig. 1 is a schematic view of a first embodiment of a system according to the invention. The automatic knitting machine is circular, of the kind with one set of vertical needles and one set of sinkers. The different elements are shown only for representation purposes and are not necessarily at the same scale.
Fig. 2 is a schematic view of another embodiment of a system according to the invention.
Fig. 3 is a schematic view of another embodiment of a system according to the invention.
Fig. 4 is a schematic top view of one example of a structured-light scanner comprising only one camera.
Fig. 5 is a schematic top view of one example of a structured-light scanner comprising two cameras.
Fig. 6 is an example of a reference image of a reference knitted fabric that is free of defects.
Fig. 7 is a schematic representation of a first structured light pattern (left) and a second structured light pattern (right).
Fig. 8 is a schematic representation of the structured light patterns of Fig. 7 overlapped to a section of the fabric. The objective of the figure is to identify how the pattern overlaps with the fabric but does not show the real fabric as it will be illuminated by the structured light patterns.
Fig. 9 and Fig. 10 show different defects in sections of knitted fabric.
Fig. 11 shows an example of a section of fabric having a defect.
Fig. 12 is its corresponding FFT of the fabric of Fig. 11.
Fig. 13 and Fig. 14 are two examples of fabrics having defects and the corresponding high-contrast images.
Fig. 15 shows an example of a trend image corresponding to a vertical black line of one of the structured light patterns.
Fig. 16 shows an example of a portion of a 3D profile of a fabric.

### Detailed description of embodiments of the invention

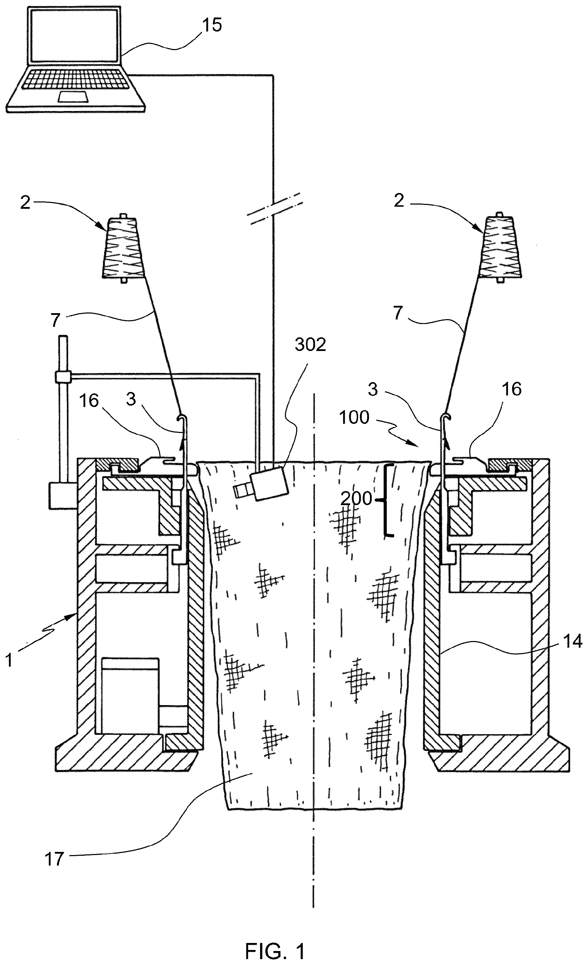

Fig. 1 relates to a first embodiment of a system and method for detecting defects in a knitted fabric 17 manufactured by an automatic circular knitting machine 1 according to the invention.

The system comprises the automatic knitting machine 1, a digital camera 302 and a computer system including a processor 15 which is connected to the digital camera 302. A software, for detecting defects, is executed by the processor 15.

The automatic knitting machine 1 comprises a plurality of yarn feeders 2 and a rotating circular knitting part 100. The knitting part 100 has a plurality of movable needles 3, each of said needles 3 being adapted to subsequently catch and free a yarn 7 provided by one of the yarn feeders 2 when the needle 3 is moved, and an actuating device for automatically moving the needles 3 according to a preestablished pattern for manufacturing a knitted fabric from the yarns 7 provided by the yarn feeders 2.

More concretely, the automatic kitting machine 1 used in the tests described below for Figs. 1 to 9 is a single jersey circular knitting machine, model 4S of CANMARTEX-JUMBERCA brand, 30 inches of diameter, gauge 28 (number of needles per inch) with 2640 needles. The needles 3 are arranged in a rotating cylinder 14, so that they travel along a circumference which is coaxial with the rotating cylinder 14. The knitting part 100 and, in particular, the needles 3 interact with cams which are statically arranged in a dial around the rotating cylinder 14, and which make each needle 3 to move vertically up and down forming stitches while the cylinder 14 rotates continuously. The rotating cylinder 14, actuated by a motor, and the static cams are the actuating device referred to above for automatically moving the needles 3. Since the cams are static, each needle 3 travelling along the circumference has a unique position at each point of said circumference. The sinkers 16 are arranged between the needles 3 and move horizontally to control the movement of the fabric as the machine knits. Each needle 3 has a free top end forming a hook and a pivoting latch which is pushed by the yarn of the knit loop as the needle 3 moves up and down, so that the latch subsequently closes and open the hook. The hook is adapted to subsequently catch and free a yarn when the needle 3 is moved. The operation of this type of circular knitting machine with needles and sinkers, as well as the movements of the latch needles to form the knit loops, are not described in greater detail here since they are well known to those skilled in the art.

Fig. 1 shows that the knitted fabric 17 is knitted forming a tube of fabric, with an external side and an internal side. The tube of fabric has a tubular top portion 200 which in contact with said knitting part 100 where the fabric is knitted. In order to clearly identify the elements, the figure shows the tube of fabric having a frustoconical shape, however, in general the top portion 200 is substantially free of tensions.

In the first embodiment, a digital camera 302 is provided statically arranged inside the tubular top portion 200 of the tube of fabric, and in a fixed position, so that the camera 302 does not rotate with the rotating cylinder 14, the knitting part 100 or the tube of knitting fabric 17. The digital camera 302 is configured to take digital images of the internal side of said tube of fabric. In this first embodiment, no dedicated illumination is required because the ambient light is enough for the camera to take pictures at the required shutter time. The digital camera 302 used in the tests described below is a video digital camera model TIS-DMK-33UX264 commercialized by the German firm The Imaging Source Europe GmbH. It is equipped with a Sony IMX264 sensor and has a 2448×2048 pixels resolution and a 35 PFS (frames per second) (FPS) video capture. The sensor operates with a Global Shutter CMOS image capture method, allowing to collect all the data at the same time without a lag due to the shutter and synchronized with the rotation of the knitted fabric 17. In the exemplary embodiment depicted in the figure, the digital camera 302 is fixed to a static support, on an outer side with respect to a virtual cylinder that axially extends the rotating cylinder 14. In other embodiments, the digital camera 302 can be arranged in different positions. For instance, they can be fixed to a static support on an inner side with respect to said virtual cylinder. All the images of the first exemplary embodiment are grayscale images, wherein each pixel values range from 0 (pure black) to 255 (pure white). Other image types may be envisaged, for example, RGB colour digital images.

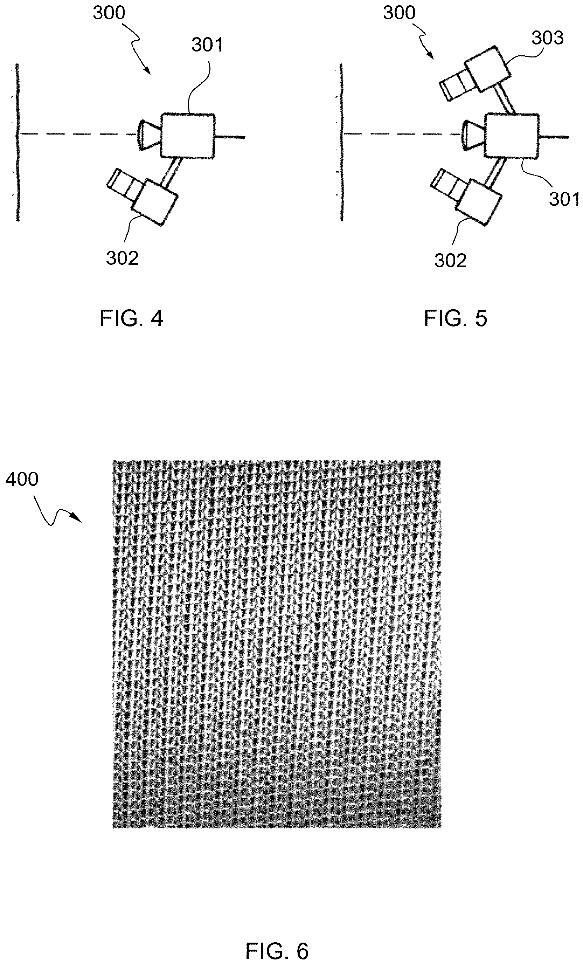

As discussed before, the system comprises a computer having a processor 15 which is connected to said digital camera 302. The processor 15 has a computer program with computer instructions that, when executed by said processor 15, cause said processor to carry out the method according to the first embodiment of the invention. The method has the following steps that are executed while the automatic knitting machine 1 is working manufacturing the knitted fabric 17:
[a] obtaining from said camera a digital image of a section of said knitted fabric 17 that is in the field of view of said digital camera 302;
[b] performing an automatic image comparison of said digital image with a reference image 400 of a reference knitted fabric that is free of defects. Fig. 5 shows an example of a reference image 400.
[c] in function of said comparison, automatically determining the presence of at least one defect in said section of said knitted fabric 17;
[d] waiting a predefined time corresponding to the time necessary for a new section of said knitted fabric 17 to be positioned in the field of view of said digital camera 302.

In the first embodiment, the reference image 400 is obtained during an initial calibration step which is equivalent to step [a]. In that calibration step the machine 1 has started knitting until a section of knitted fabric 17 that an operator validates that is free of defects is positioned in the field of view of the digital camera 302. Other options may be envisaged for obtaining the reference image 400, for example, from a database containing at least a reference image 400 for a reference fabric.

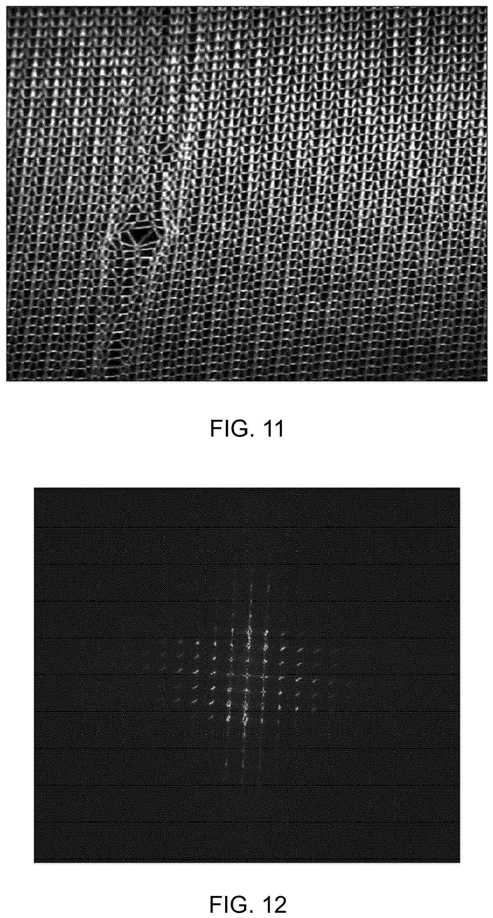

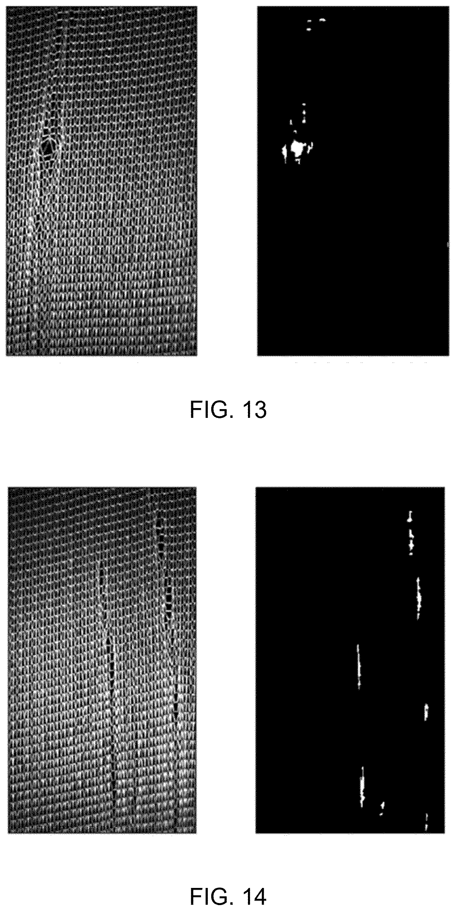

As it has been previously explained, the particularities of the computer vision methods for comparing the digital image with the reference images lie outside the scope of this document, as they may have great complexity and different equivalent methods may be used. It is a fast-evolving field, and the accuracy of results generally increases as new technologies are developed. However, in the context of this invention, the objective of any method used is comparing the digital image with the reference image to determine if the former deviates from the latter. A few indications are hereby provided for the sake of contextualization. The FFT of the reference image is obtained at the beginning of the method. Afterwards, FFT from the digital images are obtained and correlated with the FFT of the reference image. Fig. 11 is an example of fabric having defects, and Fig. 12 is its corresponding FFT. The general periodicity of the yarns in the mesh, its inclination and the separation between yarns have their corresponding representation in the FFT. The method further obtains a high-contrast image of the digital image, wherein the texture is automatically removed using the reference image. The presence of dots of said high-contrast image that surpass a certain area are identified as defects. Examples of fabrics with defects and their corresponding high-contrast images are shown in Fig. 13 and Fig. 14, where the defects appear as white areas in the high-contrast images.

The method of the embodiment further comprises automatically stitching together each of the digital images of each of the corresponding sections of the knitted fabric 17 obtained in each step [a]. By stitching them in the predetermined order a composed output image of the knitted fabric 17 that has been knitted by said machine 1 is obtained. This composed image is made available to the operator so that a general overview of the knitted fabric 17 may be done.

Other embodiments of the system and method according to the invention are disclosed hereinafter. These embodiments share most of the features disclosed in the first embodiment above. Therefore, only the differentiating features will be described in detail. For the sake of brevity, common features shared with the first embodiment disclosed above will not be described again hereinbelow.

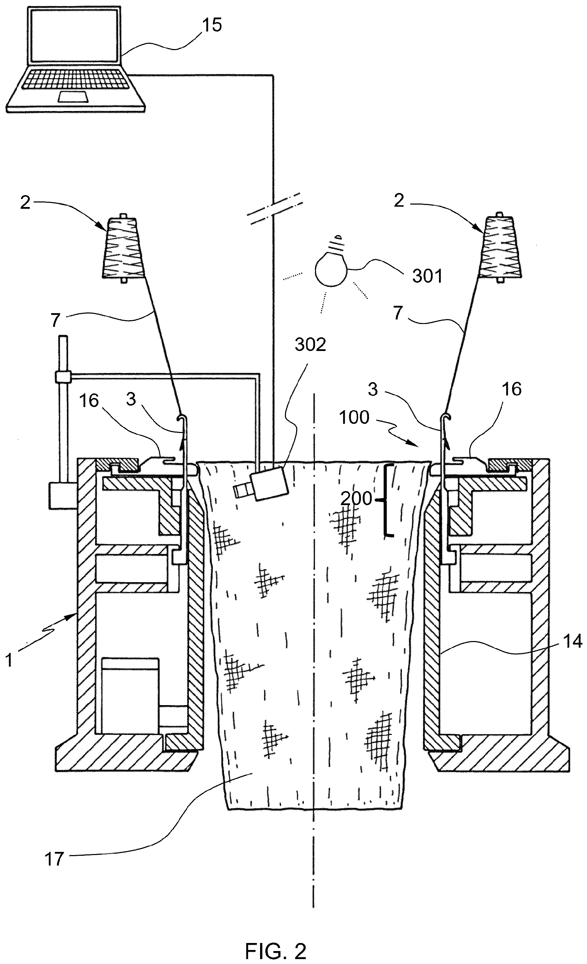

Fig. 2 shows another embodiment of the system of the invention wherein illumination means 301 is arranged to illuminate the internal side of the tubular top part 200 of the tube of fabric and, in particular, the portion that is in the field of view of the digital camera. For the sake of simplifying the figure, said illumination means are schematically represented as a bulb of light having doted lines departing from the bulb that represent the light emitted by it. However, different types of illumination means known in the art can be used for the illumination.

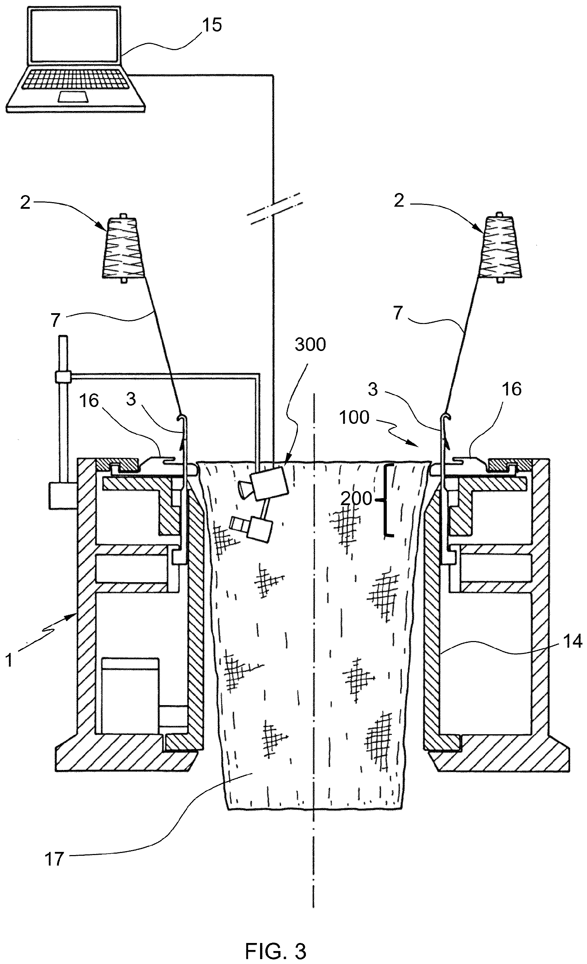

Fig. 3 shows another embodiment of the system where the illumination means is a projector 301 provided statically arranged inside said tubular top portion 200 of said tube of fabric in a fixed position and does not rotate with said rotating cylinder 14. In this exemplary embodiment, the projector 301 and the digital camera 302 are actually part of a structured-light scanner 300 which is provided in a fixed and non-rotating position inside the tubular top portion 200 of the tube of fabric. The projector 301 of the scanner 300 is arranged perpendicular to the internal side of the knitted fabric 17 and the digital camera 302 is arranged spaced away from the projector. For the sake of identifying both elements, in Fig. 3 the projector 301 and the camera 302 are shown as if they are spaced away vertically, so that they do not overlap in the figure. This position may constitute a valid option depending on the structured light emitted by the projector 301. However, in this exemplary embodiment the actual position of the camera 302 is at the same height as the projector 301, so that they are horizontally spaced away. Fig. 4 shows a schematic top view representation of the position of the camera 302 and projector 301 according to this exemplary embodiment.

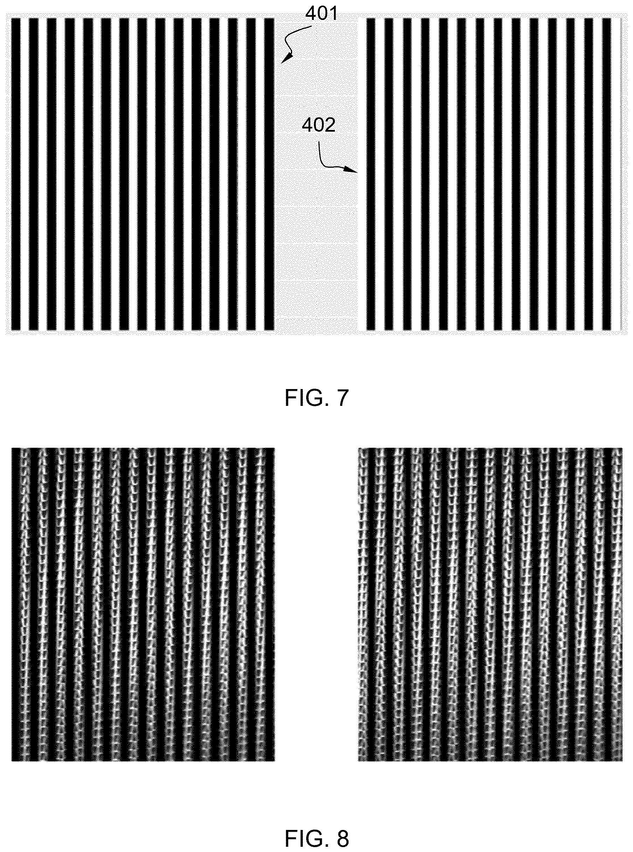

The projector 301 emits two complementary structured light patterns 401, 402 shown in Fig. 7. The first structured light pattern 401 and the second structured light pattern 402 are formed by alternating vertical white and black lines. In the context of this document, these vertical lines will be also referred as vertical bars. All the lines are of the same width and their respective positions between the first and second structured light patterns 401, 402 is reversed, so that, the result of overlapping both structured light patterns 401, 402 is a homogeneous and unstructured white illumination. As a reference, Fig. 8 shows images of each structured light pattern 401, 402 overlapped with the reference image 400 of Fig. 6. It is to be noticed, that Fig. 8 does not show the real fabric as it will be illuminated by each pattern. The width of the white and black lines is determined according to the fabric, in particular, said width is chosen to be smaller than the space between yarns of the weft and the distance between yarns of the warp of the knitted fabric 17, and chosen to be bigger than the width of the yarns of the knitted fabric 17. According to the knowledge of the art in the field of structured-light scanners, other structured light patterns may be envisaged, depending on the type of fabric, its structure and complexity, being the main constraint that two complementary patterns are used.

In this exemplary embodiment, the step [a] breaks down into the following steps:
[a1] projecting the first structured light pattern 401 with the projector 301 and obtaining a first partial digital image from the digital camera 302;
[a2] projecting the second structured light pattern 402 with the projector 301 and obtaining a second partial digital image from the digital camera 302;
[a3] combining said first partial digital image and said second partial digital image, thereby obtaining said digital image of said section of said knitted fabric 17;

In this exemplary embodiment, both partial images are grayscale images, and combining the first and second partial digital images is done by adding the first partial digital image and the second partial digital image.

The method of this exemplary embodiment further comprises the following steps between steps [a] and [d]:
[a'] by using profilometry methods, a 3D profile of the section of said knitted fabric 17 is automatically derived from the partial digital images. Said 3D profile contains information of the relief profile of the fabric 17, in particular in a direction perpendicular to said knitted fabric 17;
[b'] the 3D profile is then automatically compared with a previously obtained reference 3D profile of the reference knitted fabric that is free of defects;
[c'] in function of said comparison, the presence of at least one defect in said section of said knitted fabric 17 is automatically determined.

In this embodiment, steps [a']-[c'] are performed after steps [b]-[c]. However, other embodiments may also be envisaged where steps [a']-[c'] are performed before steps [b]-[c], or in parallel therewith. Analogously to the reference image, the reference 3D profile is obtained during the initial calibration step described in the first exemplary embodiment. In the case of the reference 3D profile, it is obtained by performing steps equivalent to [a] and [a'], that is, [a1], [a2], [a3] and [a']. In other embodiments the reference 3D profile is obtained from a database.

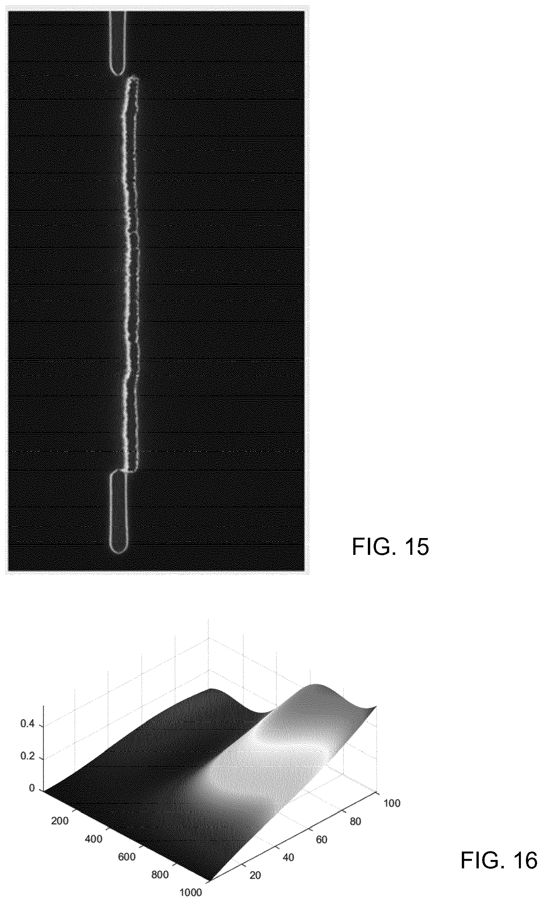

As discussed above, for the sake of brevity, the description of the particularities of the profilometry methods used in this embodiment lies outside the scope of this document. However, a few general comments are provided hereinafter. The profilometry method tracks the position of the fabric. To do this, the algorithm looks for the white pixels corresponding to each vertical black bar, that is, the white pixels captured by the camera that are located in the areas not illuminated by the projector but that reflect light from the neighboring white bar due to the profile of the fabric, and it calculates their position in the camera. Said white pixels are then joined with their nearest neighbors to generate the trend lines of the fabric obtaining a trend image corresponding to each vertical black bar. A separate trend image of each black bar is generated. Fig. 15 shows an example of a generated trend image corresponding to one vertical black bar. The method then correlates the displacement of these lines with the actual displacement of the fabric. The 3D profile is thereby generated by as many trend images as black bars of the first and second structured patterns 401, 104. In general, the finer the bars the higher the resolution. Combining the trend images, a 3D mesh is then obtained that follows the curvature of the fabric. An example of a portion of this 3D mesh is shown in Fig. 16. The comparison between the 3D profile and the reference 3D profile may be done using computer vision techniques.

Other embodiments use more than one camera in order to improve the resolution. Fig. 5 shows a partial schematic representation of an embodiment using the digital camera 302 of the previous embodiment, and a further digital camera 303 which is also statically arranged inside said tubular top portion 200, fixed to the rest of the structured-light scanner 300. Using developments in the field of structured-light 3D scanners, a better resolution is thereby obtained. Other embodiments with 3 or more cameras may also be envisaged, however, using one or two cameras is generally a good compromise between complexity and processing speed, and the resolution of the final resulting 3D profile.

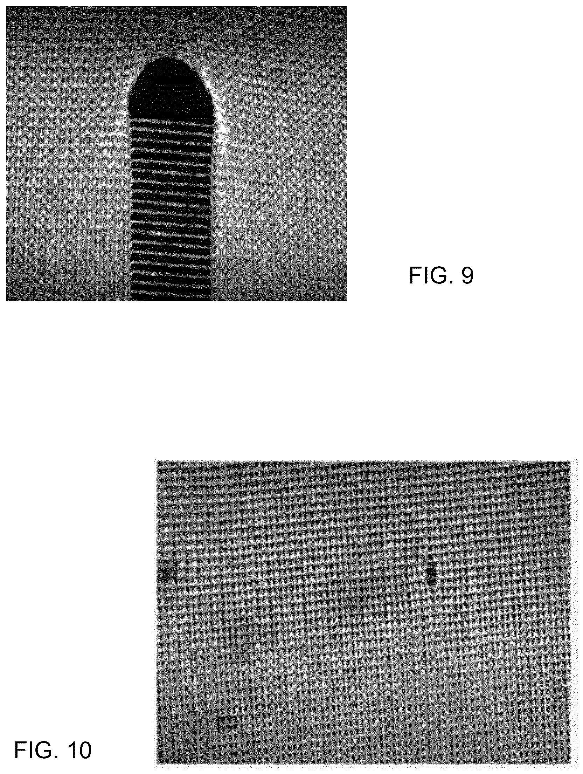

In another exemplary embodiment, derived from any of the embodiments disclosed above, when the presence of at least one defect is determined, a warning is shown so that the operator can take the necessary actions. Besides, the method comprises a further step wherein said defect is classified. A neural network, NN, is previously trained using a training corpus containing different defects that may appear in the knitted fabric 17. Some of these defects are shown in Fig. 9 and Fig. 10. The NN may be trained exclusively with digital images, with 3D profiles, or with a combination of images and 3D profiles. The data obtained for the section of fabric that is determined as having at least one defect is input into the NN, and a defect classification is obtained as an output. The classification may further include information about the possible origin of the defect, for example, in cases of defects in the fabric that are directly associated with mechanical defects in the machine 1. Classification Neural Networks or other equivalent technologies are well known in the art and their description falls outside of the objective of this document. However, the skilled person will not have problems applying the specific knowledge in the art if using the considerations described before. Performing a classification after detecting a potential problem has the advantage of minimizing the processor power required, since the classification is done only after it has already been determined that there may be a defect. Moreover, in some cases the accuracy of the classification may be improved because of the same fact.

## Claims

1. - Method for detecting defects in a knitted fabric (17) manufactured by an automatic circular knitting machine (1), said automatic knitting machine (1) comprising a plurality of yarn feeders (2) and a rotating circular knitting part (100) comprising needles (3) and sinkers (16) that cooperate with each other to knit said knitted fabric (17); said knitting part (100) being arranged in a rotating cylinder (14) which make said needles (3) and said sinkers (16) to travel along a circumference which is coaxial with said rotating cylinder (14); said knitted fabric (17) being knitted forming a tube of fabric with an external side and an internal side, said tube of fabric having a tubular top portion (200) in contact with said knitting part (100);
**characterized in that** a digital camera (302) is provided statically arranged inside said tubular top portion (200) of said tube of fabric in a fixed position, and does not rotate with said rotating cylinder (14); said digital camera (302) being configured to take digital images of said internal side of said tube of fabric;
wherein said method comprises repeating the following steps while said automatic knitting machine (1) is working manufacturing said knitted fabric (17):
[a] obtaining from said camera a digital image of a section of said knitted fabric (17) that is in the field of view of said digital camera (302);
[b] performing an automatic image comparison of said digital image with a reference image (400) of a reference knitted fabric that is free of defects;
[c] in function of said comparison, automatically determining the presence of at least one defect in said section of said knitted fabric (17);
[d] waiting a predefined time corresponding to the time necessary for a new section of said knitted fabric (17) to be positioned in the field of view of said digital camera (302).

2. - Method according to claim 1, wherein said reference image (400) is obtained from one of:
- an initial calibration step comprising equivalent step [a], in which said machine (1) has knitted a section of said knitted fabric (17) that is free of defects; or
- a database containing at least a reference image (400) for a reference fabric.

3. - Method according to any one of the claims 1 or 2, wherein illumination means (301) is arranged to illuminate at least the internal side of said tubular top part (200) that is in the field of view of said digital camera (302), preferably said illumination means comprises a projector (301) provided statically arranged inside said tubular top portion (200) of said tube of fabric in a fixed position, and does not rotate with said rotating cylinder (14).

4. - Method according to claim 3, wherein said projector (301) and said digital camera (302) are part of a structured-light scanner (300) which is provided statically arranged inside said tubular top portion (200) of said tube of fabric in a fixed position, and does not rotate with said rotating cylinder (14); said projector being arranged perpendicular to said internal side of said knitted fabric (17) and configured to project structured light, and said digital camera (302) being arranged spaced away from said projector (301);
wherein said step [a] breaks down into the following steps:
[a1] projecting a first structured light pattern (401) with said projector (301) and obtaining a first partial digital image from said digital camera (302);
[a2] projecting a second structured light pattern (402) with said projector (301) and obtaining a second partial digital image from said digital camera (302), said second structured light pattern (402) being complementary to said first structured light pattern (401), so that the addition of said first structured light pattern (401) and said second structured light pattern (402) is an unstructured homogeneous illumination pattern;
[a3] combining said first partial digital image and said second partial digital image, thereby obtaining said digital image of said section of said knitted fabric (17);
wherein said method further comprises the following steps between the steps [a] and [d]:
[a'] automatically deriving from said first partial digital image and said second partial digital image a 3D profile of said section of said knitted fabric (17), said 3D profile containing information of a relief profile of the fabric (17) in a direction perpendicular to said knitted fabric (17);
[b'] performing an automatic comparison of said 3D profile with a previously obtained reference 3D profile of said reference knitted fabric that is free of defects;
[c'] in function of said comparison, automatically determining the presence of at least one defect in said section of said knitted fabric (17);

5. - Method according to claim 4, wherein the steps [a']-[c'] are performed before the steps [b]-[c] or after the steps [b]-[c], or in parallel to the steps [b]-[c].

6. - Method according to any one of the claims 4 or 5, wherein said reference 3D profile is obtained from:
- an initial calibration step comprising equivalent steps [a] and [a'], in which said machine (1) has knitted a section of said knitted fabric (17) that is free of defects; or
- a database containing at least a reference 3D profile for a reference fabric.

7. - Method according to any one of the claims 4 to 6, wherein combining said first partial digital image and said second partial digital image in step [a3] comprises adding said first partial digital image to said second partial digital image.

8. - Method according to any one of the claims 4 to 7, wherein said first structured light pattern (401) comprises a first pattern of alternate vertical white lines and vertical black lines, and said second structured light pattern (402) comprises a second pattern of alternate vertical white lines and vertical black lines, all the white lines and the black lines of the first pattern and the second pattern having the same width, wherein the position of the black lines of the first pattern corresponds to the position of the white lines of the second pattern, and the position of the white lines of the first pattern corresponds to the position of the black lines of the second pattern.

9. - Method according to claim 8, wherein the width of the white lines and the black lines of the first pattern and the second pattern is smaller than the space between yarns of the weft and the distance between yarns of the warp of the knitted fabric (17).

10. - Method according to any one of the claims 8 or 9, wherein the width of the white lines and the black lines of the first pattern and the second pattern is bigger than the width of the yarns of said knitted fabric (17).

11. - Method according to any one of the claims 4 to 10, wherein said structured-light scanner (300) comprises a further digital camera (303) statically arranged inside said tubular top portion (200) of said tube of fabric in a fixed position, and that does not rotate with said rotating cylinder (14); said further digital camera (303) being spaced away from said projector (301) and from said digital camera (302), and configured to take further digital images of the same section of the knitted fabric that said digital camera (302), wherein step [a1] further comprises obtaining a further first partial digital image of said section of said knitted fabric (17) from said further digital camera (302), step [a2] further comprises obtaining a further second partial digital image of said section of said knitted fabric (17) from further said digital camera (302), and said 3D profile obtained in step [a'] is further derived from said further first partial digital image and said further second digital image.

12. - Method according to any one of the claims 1 to 11, wherein said method further comprises automatically stitching together each of said digital images of each of said sections of said knitted fabric (17) obtained in each step [a], thereby obtaining a composed output image of the knitted fabric (17) that has been knitted by said machine (1).

13. - Method according to any one of the claims 1 to 12, wherein in case of determining the presence of at least one defect in said section of said knitted fabric (17) in step [c] and/or in step [c'], the method comprises a further step of defect classification, in which a type of defect is automatically derived from said digital image and/or said 3D profile.

14. - System for detecting defects in a knitted fabric (17) manufactured by an automatic circular knitting machine (1), said automatic knitting machine (1) comprising a plurality of yarn feeders (2) and a rotating circular knitting part (100) comprising needles (3) and sinkers (16) that cooperate with each other to knit said knitted fabric (17); said knitting part (100) being arranged in a rotating cylinder (14) which make said needles (3) and said sinkers (16) to travel along a circumference which is coaxial with said rotating cylinder (14); said knitted fabric (17) being knitted forming a tube of fabric with an external side and an internal side, said tube of fabric having a tubular top portion (200) in contact with said knitting part (100);
**characterized in that** a digital camera (302) is provided statically arranged inside said tubular top portion (200) of said tube of fabric in a fixed position, and does not rotate with said rotating cylinder (14); said digital camera (302) being configured to take digital images of said internal side of said tube of fabric;
wherein said method comprises repeating the following steps while said automatic knitting machine (1) is working manufacturing said knitted fabric (17):
[a] obtaining from said camera a digital image of a section of said knitted fabric (17) that is in the field of view of said digital camera (302);
[b] performing an automatic image comparison of said digital image with a reference image (400) of a reference knitted fabric that is free of defects;
[c] in function of said comparison, automatically determining the presence of at least one defect in said section of said knitted fabric (17);
[d] waiting a predefined time corresponding to the time necessary for a new section of said knitted fabric (17) to be positioned in the field of view of said digital camera (302).
the system further comprising:
- a processor (15) connected to said digital camera (302);
- a computer program comprising computer instructions which, when executed by said processor (15), cause said processor to carry out the method according to any one of the claims 1 to 13.

15. Computer program for detecting defects in a knitted fabric (17) manufactured by an automatic circular knitting machine (1), said computer program comprising instructions which, when executed by a processor (15), cause said processor (15) to carry out the method according to any one of the claims 1 to 13.
